# EUROPÄISCHE PATENTANMELDUNG

(11) **EP 2 466 710 A1**
(43) Veröffentlichungstag der Anmeldung: **20.06.2012**
(21) Anmeldenummer: 11185939.3
(22) Anmeldetag: 20.10.2011
(51) Int. Cl.: H02H 1/00

(54) **Verfahren und Vorrichtung zum Detektieren eines Störlichtbogenereignisses in einem Wechselspannungsnetz**

(30) Priorität: 17.12.2010 DE 102010063422
(71) Anmelder: SIEMENS AKTIENGESELLSCHAFT, 80333 München (DE)
(72) Erfinder: Hueber, Alexander, 84085 Niederleierndorf (DE); Martel, Jean-Mary, 93105 Tegernheim (DE)

(57) **Zusammenfassung**

Störlichtbögen insbesondere bei Hausinstallationssystemen im Strombereich zwischen 20 A und 50 A sollen sicherer erkannt werden. Daher wird ein Verfahren zum Detektieren eines Störlichtbogenereignisses in einem Wechselspannungsnetz durch Erfassen einer aktuellen Rauschleistung (P_{N}) in dem Wechselspannungsnetz vorgeschlagen. Es wird die Steilheit einer Flanke (2) einer Halbwelle eines Stromstärkeverlaufs (1) in dem Wechselspannungsnetz erfasst und ein Integral (Int1) über der Zeit gebildet, wenn die Steilheit der Flanke (2) einen vorbestimmten Steilheitsschwellwert (S1) überschreitet, solang die aktuelle Rauschleistung während der Halbwelle einen Leistungsschwellwert (S2) übersteigt. Schließlich wird entschieden, dass das Störlichtbogenereignis vorhanden ist, wenn das Integral (Int1) einen vorgegebenen Integrationsschwellwert (S3) erreicht oder übersteigt.

## Beschreibung

Die vorliegende Erfindung betrifft ein Verfahren zum Detektieren eines Störlichtbogenereignisses in einem Wechselspannungsnetz durch Erfassen einer aktuellen Rauschleistung in dem Wechselspannungsnetz. Darüber hinaus betrifft die vorliegende Erfindung eine entsprechende Vorrichtung zum Detektieren eines Störlichtbogenereignisses. Bei einem Störlichtbogenereignis kann es sich um einen oder mehrere Störlichtbögen handeln.

Bei Installationssystemen, z. B. Haushaltinstallationssystem, kann es zu Störlichtbögen kommen, wenn Leitungen beziehungsweise deren Isolationen defekt oder angeschlossene Geräte nicht mehr in Ordnung sind. Um den Stromkreis möglichst rasch zu unterbrechen, wenn ein Störlichtbogen auftritt, werden Schutzschalter in dem Installationssystem eingesetzt.

Schutzschalter gegen Störlichtbögen werden auch AFDD (Arc Fault Detection Device) genannt. Derartige Schutzschalter sind Schutzgeräte, die mithilfe von komplexen Algorithmen elektrische Signale beziehungsweise deren Stromkreise überwachen, um Störlichtbögen in den elektrischen Installationen detektieren zu können.

Algorithmen, die stabil brennende Störlichtbögen von so genannten störenden Verbrauchern, wie z. B. elektrische Motoren mit Bürsten, unterscheiden können, sind beispielsweise aus der Druckschrift US 5 729 145 A bekannt. Die dort beschriebene Technik schützt gegen Störlichtbögen in einem Strombereich, der bei ungefähr 20 A endet. Der begrenzte Schutzbereich ist darauf zurückzuführen, dass Lichtbogenfehler ab einem Strom von ca. 20 A in den seltensten Fällen stabil brennen. Vielmehr treten Störlichtbögen in einem Strombereich über 20 A eher unkontrolliert mit Unterbrechungen auf. Das Messprinzip der Druckschrift US 5 729 145 A beruht jedoch darauf, einen stabil brennenden Lichtbogen, der zwischen zwei Null- Durchgängen eines Wechselstromsystems auftritt, mittels Strom- und Leistungsmessung zu detektieren. Liegt der Strom und die Rauschleistung über vorgegebenen Schwellwerten, so wird ein Zähler inkrementiert. Überschreitet der Zähler einen bestimmten Wert, so löst der Schutzschalter aus. Dieses Auslöseprinzip ist nicht für instabile Störlichtbögen geeignet.

Eine Technik zur Erfassung von Störlichtbögen in höheren Strombereichen (größer ca. 50 A) ist in der Patentschrift US 6 031 699 A beschrieben. Entsprechend der dortigen Technik wird anhand des Anstiegs und der Höhe des Stroms für ein Auslösen des Schutzschalters entschieden. Störlichtbögen haben nämlich die Eigenschaft, dass deren Stromverlauf eine stark ansteigende Flanke aufweist, was aber auch bei Lasten mit einem hohen Verbrauchsstrom der Fall sein kann. Die Problematik besteht also darin, dass Verbraucher mit hohen Anlaufströmen, die oft ein Vielfaches des Nennstroms betragen, unerwünschte Auslösungen des Schutzschalters hervorrufen können, da sie die entsprechenden Schwellwerte bezüglich Anstieg und Höhe des Stroms erreichen. Eine Erhöhung der Erfassungsschwelle würde den Störlichtbogenschutz verschlechtern und eine Verringerung würde mehr Fehlauslösungen mit sich bringen. Somit ist dieses System nicht sehr zuverlässig sowohl im Schutz gegen Störlichtbögen als auch gegen Fehlauslösungen.

Die Aufgabe der vorliegenden Erfindung besteht somit darin, auch weniger stabil brennende Störlichtbögen insbesondere im Strombereich von ca. 20 A bis 50 A, zuverlässiger detektieren zu können.

Erfindungsgemäß wird diese Aufgabe gelöst durch ein Verfahren zum Detektieren eines Störlichtbogenereignisses in einem Wechselspannungsnetz durch
- Erfassen einer aktuellen Rauschleistung in dem Wechselspannungsnetz,
- Erfassen einer Steilheit einer Flanke einer Halbwelle eines Stromstärkeverlaufs in dem Wechselspannungsnetz,
- Bilden eines Integrals über der Zeit, wenn die Steilheit der Flanke einen vorbestimmten Steilheitsschwellwert überschreitet, solange die aktuelle Rauschleistung während der Halbwelle einen Leistungsschwellwert übersteigt,
- Entscheiden, dass das Störlichtbogenereignis vorhanden ist/war, wenn das Integral einen vorgegebenen Integrationsschwellwert erreicht oder übersteigt.

Darüber hinaus wird erfindungsgemäß bereitgestellt eine Vorrichtung zum Detektieren eines Störlichtbogenereignisses in einem Wechselspannungsnetz mit
- einer Leistungsmesseinrichtung zum Erfassen einer aktuellen Rauschleistung in dem Wechselspannungsnetz,sowie
- einer Strommesseinrichtung zum Erfassen einer Steilheit einer Flanke einer Halbwelle eines Stromstärkeverlaufs in dem Wechselspannungsnetz,
- einer Integrationseinrichtung zum Bilden eines Integrals über der Zeit, wenn die Steilheit der Flanke einen vorbestimmten Steilheitsschwellwert überschritten hat, solange die aktuelle Rauschleistung während der Halbwelle einen Leistungsschwellwert übersteigt, und
- einer Logikeinrichtung zum Entscheiden, dass das Störlichtbogenereignis vorhanden ist/war, wenn das Integral einen vorgegebenen Integrationsschwellwert erreicht oder übersteigt.

In vorteilhafter Weise werden hier also zwei sehr spezifische Detektionsverfahren miteinander kombiniert. Zum einen erfolgt die Rauschleistungsmessung ohne die Strommessung ähnlich wie bei stabil brennenden Störlichtbögen im niederen Strombereich, und zum anderen wird die Flanke des Stromverlaufs wie beim Detektieren von Störlichtbögen im höheren Strombereich erfasst. Damit kann dann insbesondere im Strombereich zwischen ca. 20 A und 50 A eine zuverlässige Störlichtbogendetektion erfolgen.

Vorzugsweise wird der Strom vor dem Erfassen der Flankensteilheit gleichgerichtet. Damit lässt sich die Flanke des Stroms einer Halbwelle, unabhängig davon, ob es sich um eine positive oder eine negative Halbwelle handelt, einfacher detektieren.

Die Rauschleistung wird vorzugsweise nur in einem vorgegebenen Frequenzbereich erfasst. Zur zuverlässigen Störlichtbogendetektion genügt es nämlich, einen gewissen Teil des Spektrums zu analysieren.

Besonders vorteilhaft ist auch, wenn das Integral über der Zeit während einer der Halbwelle folgenden weiteren Halbwelle erhöht wird, falls die Steilheit der Flanke der weiteren Halbwelle ebenfalls über dem vorbestimmten Steilheitsschwellwert und die aktuelle Rauschleistung über dem vorbestimmten Leistungsschwellwert liegen. Damit wird die Zeit aufintegriert, während der ein Störlichtbogen brennt und die jeweilige Einheit beschädigt oder zerstört.

Alternativ kann das Integral auch nach der Halbwelle und jeder folgenden Halbwelle jeweils auf null zurückgesetzt werden. Damit erfolgt ein Auslösen nur dann, wenn ein Lichtbogen einer Halbwelle den vorbestimmten Integrationswert erreicht.

Das Integral kann ferner während der Halbwelle oder den Halbwellen unverändert bleiben oder reduziert werden, wenn die aktuelle Rauschleistung nicht über den vorbestimmten Leistungsschwellwert liegt. Damit wird die Tatsache berücksichtigt, dass bei einem erloschenen Störlichtbogen keine weitere Beschädigung, gegebenenfalls sogar eine geringfügige Erholung des Materials eintreten kann.

Entsprechend einer alternativen Ausführungsform wird das Wechselspannungsnetz über mehrere Halbwellen bezüglich Störlichtbögen analysiert, die Werte der Integrale werden jeweils am Ende der zugehörigen Halbwelle, bevor sie zurückgesetzt werden, zu einer Summe aufsummiert, und es wird für das Vorhandensein eines Störlichtbogenereignisses entschieden, wenn die Summe einen vorgegebenen Summenwert überschreitet. Es handelt sich dabei um ein zweistufiges System, bei dem die einzelnen Stufen unabhängig voneinander ein Auslösen des Schutzschalters bewirken können. In der einen Stufe werden lediglich die Auswirkungen einer Halbwelle betrachtet, während in der zweiten Stufe die Auswirkungen mehrerer Halbwellen aufsummiert werden.

Gegebenenfalls erfolgt das Bilden des Integrals über der Zeit durch periodisches Inkrementieren. Das Integrieren über die Zeit wird also einfach durch das Hochzählen eines Zählers in einem vorbestimmten Takt implementiert.

Des Weiteren kann eine aktuelle Stromstärke als Integrand für die Bildung des Integrals eingesetzt werden.

Die vorliegende Erfindung wird nun anhand der beigefügten Zeichnungen näher erläutert, in denen zeigen:
FIG 1 den zeitlichen Verlauf des Stroms, der Ableitung des Stroms, der Rauschleistung und des Detektionsintegrals gemäß einer ersten Ausführungsform und
FIG 2 den Verlauf des Stroms, der Ableitung des Stroms, der Rauschleistung und zweier für das Auflösen eines Schutzschalters nutzbaren Integrale.

Die nachfolgend näher geschilderten Ausführungsbeispiele stellen bevorzugte Ausführungsformen der vorliegenden Erfindung dar.

Das erfindungsgemäße Verfahren basiert auf dem Gedanken, dass für die Zeitdauer, in der der Störlichtbogen brennt, ein höherer Pegel der Rauschleistung auf dem Netz messbar ist. Dieses Signal wird in einem bestimmten Frequenzbereich überwacht und für die Störlichtbogenerkennung genutzt. Anstelle der reinen Strommessung, die für Lichtbögen bis zu ca. 20 A herangezogen wird, wird hier der Anstieg des Stroms untersucht, wie es für Lichtbögen in einem Strombereich über 50 A gemacht wird. Die Rauschleistungsmessung wird also um eine Funktion erweitert, und diese Gesamtfunktion oder auch nur ein Teil davon kann als Hardware oder Software realisiert werden. Um keine Informationen des Stroms zu verlieren, ist es günstig, diesen vorher gleichzurichten. Das Gleichrichten ist jedoch nur als optional anzusehen.

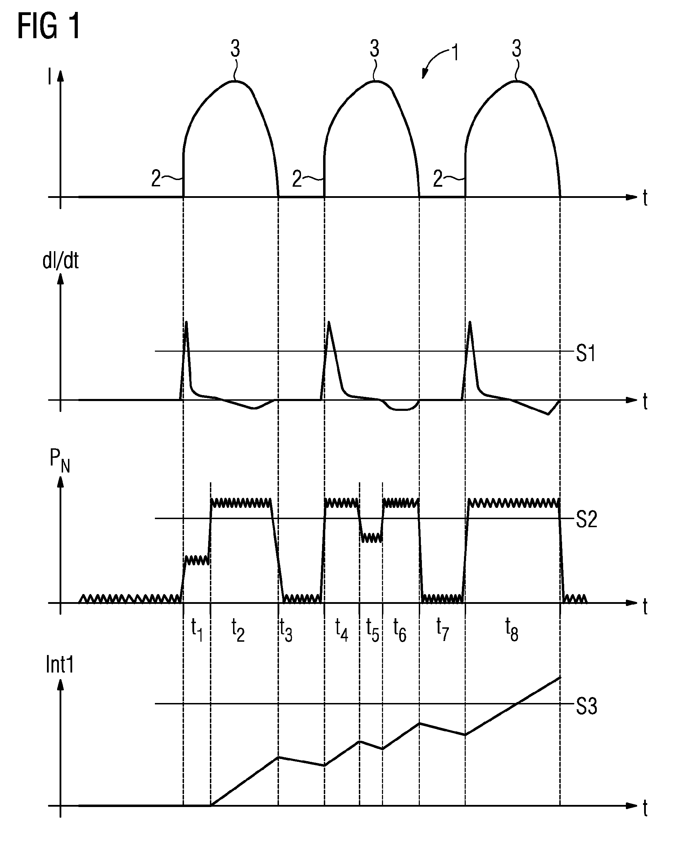

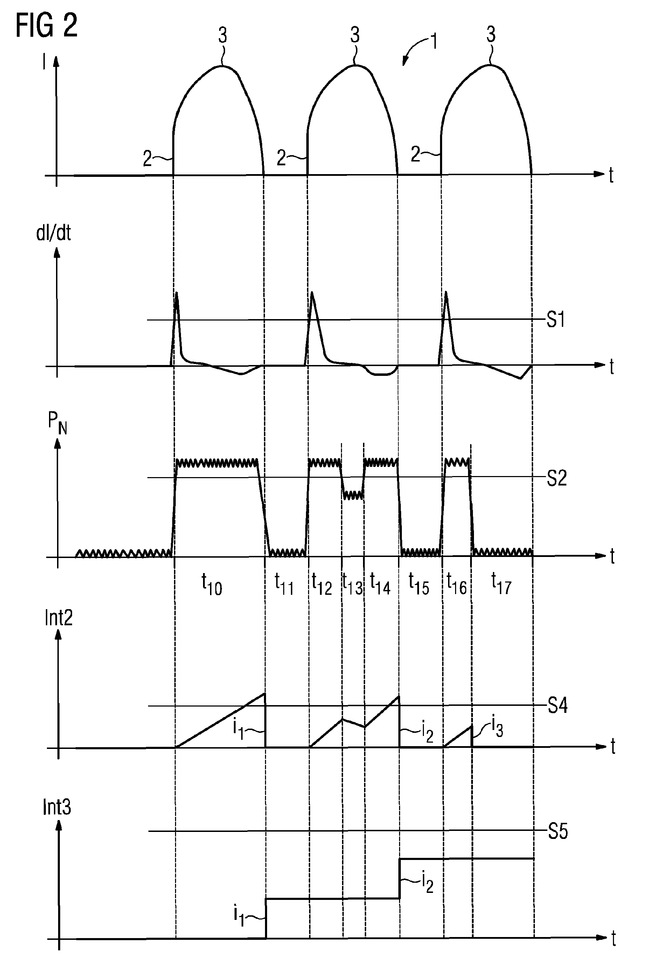

Nachfolgend werden zwei Ausführungsformen näher geschildert: eine im Zusammenhang mit FIG 1 und die andere im Zusammenhang mit FIG 2.

Bei der Ausführungsform von FIG 1 wird der Strom in dem Wechselspannungskreis untersucht. Dazu wird der Strom beziehungsweise eine entsprechende Größe gleichgerichtet. Demnach ergibt sich der in FIG 1 oben dargestellte Stromverlauf 1 über der Zeit t. Der Stromverlauf basiert auf dem sinusförmigen Wechselstrom und wird geprägt durch eine steile Flanke 2 zu Beginn jeder Halbwelle 3. Die steile Flanke ergibt sich beim Zünden eines Störlichtbogens bei jeder Halbwelle.

Unterhalb des Stromverlaufs ist in FIG 1 die entsprechende Ableitung des Stroms dI/dt dargestellt. Wegen der steilen Flanke 2 des Stromverlaufs zu Beginn jeder Halbwelle 3 ist die Ableitung dI/dt zu diesem Zeitpunkt entsprechend hoch. Im weiteren Verlauf der Halbwelle 3 ist die Ableitung betragsmäßig eher gering.

Der Wert der Ableitung des Stromverlaufs übersteigt an den Flanken 2 einen Schwellwert S1. Damit ist für den Algorithmus ein Kriterium für die Entscheidung des Vorliegens eines Störlichtbogens bzw. Störlichtbogenereignisses während einer Halbwelle 3 erfüllt.

Unter der Ableitung dI/dt ist in FIG 1 zeitlich korrespondierend die Rauschleistung P_{N} dargestellt. Die Rauschleistung stellt ein zweites Indiz für das Vorliegen eines Störlichtbogens dar. Erhöhte Rauschleistung ist hier im zeitlichen Fenster der Halbwellen 3 zu beobachten. Bei der Rauschleistung handelt es sich insbesondere um die Rauschleistung hochfrequenter Signale, also um HF-Rauschleistungen. Während eines Zeitabschnitts t₁ liegt die Rauschleistung unterhalb einer Rauschleistungsschwelle S2. Während eines nachfolgenden Zeitabschnitts t₂ liegt die Rauschleistung P_{N} über der Rauschleistungsschwelle S2. Es schließen sich dann weitere Zeitabschnitte t₃ bis t₈ an, wobei in den Zeitabschnitten t₃ und t₇ kein Störlichtbogen brennt und die Rauschleistung dementsprechend niedrig ist. In den Zeitabschnitten t₄, t₆ und t₈ liegt die Rauschleistung über der Schwelle S2 und in dem Zeitabschnitt t₅ liegt sie wie in dem Zeitabschnitt t₁ unterhalb der Schwelle S2. Die Zeitabschnitte t₃ bis t₆ repräsentieren eine erste Halbperiode des Wechselspannungs- beziehungsweise Wechselstromsignals und die Zeitabschnitte t₇ mit t₈ eine zweite Halbperiode. Die Halbwelle 3, während der der Störlichtbogen brennt, erstreckt sich zeitlich jeweils nur über einen Teil der entsprechenden Halbperiode (z. B. t₄ bis t₆ der Halbperiode t₃ bis t₆).

Der unterste Verlauf in FIG 1 zeigt einen Integratorwert Int1. Der Integratorwert Int1 stellt einen Integrationswert über der Zeit dar. Die Integration wird einfach dadurch implementiert, dass ein Integrator bzw. Zähler in einem fest vorgegebenen Takt beziehungsweise einer fest vorgegebenen Periode hochgezählt wird. Es ergibt sich dann für den Wert Int1 beim Hochzählen ein entsprechender linearer Anstieg wie beispielsweise in dem Zeitabschnitt t₂.

Zu Beginn einer Halbwelle 3 stellt sich eine steile Flanke 2 des Stroms I ein. Die ausreichend hohe Steilheit wird durch die Ableitung festgestellt. Sie übersteigt zu Beginn des Zeitabschnitts t₁ den Schwellwert. Dies ist für den Integrator prinzipiell das Signal, dass während der Halbwelle 3 hochgezählt beziehungsweise integriert werden kann. Da allerdings die Rauschleistung P_{N} im ersten Zeitabschnitt t₁ unterhalb des Schwellwerts S2 liegt, wird der Integrator noch nicht hochgezählt. Im Zeitabschnitt t2 liegt die Rauschleistung dann über dem Schwellwert S2 und der Integrator wird hochgezählt, sodass der Integratorwert Int1 entsprechend linear steigt. Am Ende der Halbwelle 3 endet das Hochzählen mit dem Ende des Zeitabschnitts t₂. Während des Zeitabschnitts t₃ brennt der Störlichtbogen nicht und der Integrator wird dekrementiert. Wie aus der Grafik von FIG 1 zu erkennen ist, wird in dem Beispiel langsamer dekrementiert als inkrementiert. Zu Beginn des Zeitabschnitts t₄ kommt es wieder zu der steilen Flanke 2 und der Integrator wird inkrementiert, da die Rauschleistung P_{N} in diesem Zeitabschnitt über S2 liegt. In dem Zeitabschnitt t₅ wird dekrementiert, da die Rauschleistung unter der Schwelle S2 liegt. In dem Zeitabschnitt t₆ hingegen wird der Integrator wieder inkrementiert. Entsprechend wird der Integrator in den Zeitabschnitten t₇ und t₈ wieder dekrementiert beziehungsweise inkrementiert.

Während des Zeitabschnitts t₈ übersteigt der Integratorwert Int1 einen Integrationsschwellwert S3. Dieses Überschreiten des Integrationsschwellwerts kann so interpretiert werden, dass sicher einer oder mehrere Störlichtbögen, d. h. ein Störlichtbogenereignis, vorhanden waren. Das Überschreiten des Integrationsschwellwerts kann aber auch zum Auslösen eines entsprechenden Schutzschalters herangezogen werden, der von einer entsprechenden Vorrichtung zum Detektieren eines Störlichtbogenereignisses angesteuert wird beziehungsweise diese beinhaltet.

Der Funktionsablauf zur Detektion eines oder mehrerer Störlichtbögen beziehungsweise zur Auslösung eines Schutzschalters gemäß der ersten Ausführungsform kann folgendermaßen zusammengefasst werden:

Der Integrator gibt Auskunft über den Anstieg und die Flussdauer des Stroms und den Pegel der Rauschleistung. Der Wert des Integrators kann sich entweder erhöhen, unverändert bleiben (z. B. für eine feste Zeit von 10 ms oder 100 ms) oder sich verringern. Das Minimum des Integratorwerts liegt bei seinem Startwert. Damit der Integrator seinen Wert verändert, muss eine der folgenden Bedingungen erfüllt sein. Ansonsten bleibt der Wert des Integrators unverändert.

Zur Erhöhung des Integratorwerts muss der Strom eine ausreichend steile Flanke (ausreichend hohe Ableitung) aufweisen. Überschreitet der Stromanstieg die feste Schwelle S1, kann diese Information für eine bestimmte Zeitdauer (in der Regel eine Halbwelle bzw. Halbperiode) gespeichert werden. Das Speichern kann mittels geeigneter Hardware, z. B. mithilfe eines RC-Glieds erfolgen. Zugleich zu der Information, dass der Stromanstieg die Schwelle S1 in dem Zeitfenster (z. B. Halbwelle) überschritten hat, muss auch eine Entscheidung vorliegen, dass die Rauschleistung einen störlichtbogentypischen Pegel hat, also den Schwellwert S2 überschritten hat. Sobald beide Informationen positiv vorliegen, wird der Integrator erhöht.

Zur Verringerung des Integrationswerts muss die Rauschleistung unterhalb des festgelegten Schwellwerts S2 für Störlichtbögen liegen oder es muss eine festgelegte Zeitdauer keinen Stromfluss geben. Wenn eine dieser beiden Bedingungen erfüllt ist, wird der Integrator also dekrementiert.

Vorzugsweise wird der Integrationswert des Integrators um einen zum aktuellen Strom (Amplitude der Stromstärke) proportionalen Wert erhöht. Die Höhe des Dekrements des Integrators kann unabhängig davon jeweils separat definiert werden. Überschreitet der Integrationswert den Schwellwert S3, löst der AFDD aus und trennt über eine dafür vorgesehene Vorrichtung den Verbraucher vom Netz.

Gemäß einer zweiten Ausführungsform, die im Zusammenhang mit FIG 2 näher erläutert wird, liegt in dem Wechselspannungsnetz ein gleicher Stromverlauf und ein gleicher Stromanstieg (Ableitung des Stromverlaufs) wie in FIG 1 vor. Es wird also bezüglich des Stromverlaufs und der Ableitung des Stromverlaufs, die in FIG 2 oben dargestellt sind, auf die Beschreibung von FIG 1 verwiesen. Die Rauschleistung P_{N} hat hier einen etwas anderen Verlauf. Nach einer ersten steilen Flanke 2 des Stromverlaufs 1 liegt die Rauschleistung für einen Zeitabschnitt t₁₀ bis zum Ende der Halbperiode oberhalb des Leistungsschwellwerts S2. Anschließend erlischt der Störlichtbogen bis zur nächsten Flanke 2. In diesem erloschenen Zustand (Zeitabschnitt t₁₁ ist die Rauschleistung P_{N} niedrig und liegt unter dem Leistungsschwellwert S2. Nach dem erneuten Zünden des Störlichtbogens liegt die Rauschleistung zunächst für einen Zeitabschnitt t₁₂ über dem Schwellwert S2, danach für den Zeitraum t₁₃ kurz darunter und anschließend für den Zeitraum t₁₄ wieder darüber. Während des anschließenden Zeitabschnitts t₁₅ ist der Störlichtbogen wieder erloschen und die Störleistung ist entsprechend niedrig unterhalb der Schwelle S2. Beim nächsten Zünden eines Störlichtbogens liegt die Rauschleistung für einen Zeitabschnitt t₁₆ überhalb des Schwellwerts S2 und danach bis zum Ende der entsprechenden Halbperiode für den Zeitabschnitt t₁₇ unterhalb des Schwellwerts S2.

Ein erster Integrator produziert hier einen Integrationswert Int2. Der erste Integrator betrachtet immer eine halbe Periode beziehungsweise Halbwelle. Für die erste Halbwelle liegt hier die Information vor, dass die Ableitung dI/dt den Steilheitsschwellwert S1 überschritten hat und die Rauschleistung P_{N} in der gezündeten Phase des Störlichtbogens (also in Zeitabschnitt t₁₀) oberhalb des Leistungsschwellwerts S2 liegt. Folglich integriert der erste Integrator die Zeit auf, während der Störlichtbogen brennt. Dies bedeutet hier, dass der als einfacher Zähler realisierte Integrator gemäß einem festen Takt beziehungsweise einer festen Periode hochgezählt wird, sodass der Integrationswert Int2 während des Zeitabschnitts t₁₀ linear ansteigt. Am Ende der Halbwelle beziehungsweise der Halbperiode wird der Integrationswert Int2 auf null zurückgesetzt.

Da auch für die zweite Halbwelle die Information vorliegt, dass die Stromanstiegsflanke 2 ausreichend hoch ist, d. h. die Ableitung über dem Schwellwert S1 liegt, wird der erste Integrator für diese Halbwelle prinzipiell wieder hochgezählt. Tatsächlich erfolgt dies auch in dem Zeitabschnitt t₁₂ und in dem Zeitabschnitt t₁₄, da in diesen beiden Zeitabschnitten die Rauschleistung über dem Schwellwert S2 liegt. Während des Zeitabschnitts t₁₃ hingegen liegt die Rauschleistung unterhalb des Schwellwerts S2, sodass der erste Integrator entsprechend dekrementiert wird. Nach Erlöschen dieses zweiten Lichtbogens wird auch der Integrationswert Int2 auf null zurückgesetzt.

Auch für die dritte Halbwelle des Stroms liegt die Information vor, dass der Anstieg der anfänglichen Flanke über dem Schwellwert S1 liegt, was als Indiz für einen Störlichtbogen gilt. Der erste Integrator wird also prinzipiell auch hochzählen. Er tut dies allerdings nur in dem kurzen Zeitabschnitt t₁₆, in dem die Rauschleistung über dem Schwellwert S2 liegt. In dem anschließenden Zeitabschnitt t₁₇ ist die Rauschleistung sehr gering, was auf ein Erlöschen des Lichtbogens hindeutet. Daher wird der Integrationswert Int2 zu Beginn des Zeitabschnitts t₁₇ auf null zurückgesetzt.

Es ist zu erkennen, dass der Integrationswert Int2 nur während der ersten Halbwelle und der zweiten Halbwelle einen Integrationsschwellwert S4 überschreitet. Während der dritten Halbwelle bleibt der Integrationswert Int2 unterhalb dieses Schwellwerts S4. Wegen des Überschreitens des Schwellwerts S4 wird entschieden, dass ein Störlichtbogenereignis vorliegt. Im Falle der dritten Halbwelle wird entschieden, dass kein kritischer Störlichtbogen vorliegt.

Abhängig davon wird in der Vorrichtung zum Detektieren eines Störlichtbogens beziehungsweise in dem Schutzschalter durch einen zweiten Integrator ein weiterer Integrationswert Int3 gebildet. Der entsprechende Verlauf ist in FIG 2 unten dargestellt. Der Integrationswert Int2 übersteigt am Ende des Zeitabschnitts t₁₀ den Schwellwert S4 und erreicht den Wert i₁. Daher wird der Summen- beziehungsweise Integrationswert Int3 am Ende des Zeitabschnitts t₁₀ um den Wert i₁ erhöht.

Am Ende des Zeitabschnitts 14 erreicht der Integrationswert Int2 den Wert i₂ oberhalb des Schwellwerts S4. Folglich wird am Ende des Zeitabschnitts t₁₄ der Integrationswert Int3 um den Wert i₂ erhöht.

Am Ende des Zeitabschnitts t₁₆ erreicht der Integrationswert Int2 den Wert i₃ unterhalb des Schwellwerts S4. Da der Schwellwert S4 nicht erreicht wird, wird der Integrationswert Int3 nicht erhöht. Entsprechend einer ersten Ausführungsvariante, die in FIG 2 dargestellt ist, bleibt der Integrationswert Int3 über den Zeitabschnitt t₁₆ hinaus zunächst konstant. Er kann dann, wie unten näher erläutert werden wird, rein zeitlich dekrementiert werden. Gemäß einer alternativen Ausführungsform kann der Integrationswert Int3 auch dekrementiert werden, wenn der Integrationswert Int2 die Schwelle S4 nicht erreicht.

Erreicht oder Überschreitet der Integrationswert Int3 eine separate Schwelle S5, so wird hier ebenfalls entschieden, dass ein Lichtbogenereignis vorliegt. Während die Entscheidung bezüglich des Vorliegens eines Störlichtbogenereignisses auf der Basis des Werts Int2 und der Schwelle S4 hier nur für die Bildung des Integrationswerts Int3 herangezogen wird, wird die Entscheidung bezüglich des Vorliegens eines Störlichtbogenereignisses auf der Basis des Werts Int3 und Schwelle S5 hier für das Auslösen des Schutzschalters genutzt.

Nachfolgend wird die Funktionsweise des Detektionsverfahrens gemäß FIG 2 kurz zusammengefasst. Der erste Integrator, der den Integrationswert Int2 liefert, gibt Auskunft über den Anstieg und die Flussdauer des Stroms und den Pegel der Rauschleistung. Der Wert Int2 des ersten Integrators kann entweder erhöht oder auf seinen Startwert zurückgesetzt werden. Damit der erste Integrator erhöht wird, müssen folgende Bedingungen erfüllt sein: der Strom muss eine ausreichend steile Flanke 2 aufweisen. Überschreitet der Stromanstieg dI/dt die feste Schwelle S1, kann diese Information für eine bestimmte Zeitdauer (z. B. Halbwelle) wie in dem ersten Ausführungsbeispiel gespeichert werden. Das Speichern kann auch hier mittels Hardware, z. B. über ein RC-Glied erfolgen. Als zweite Bedingung muss auch hier die Rauschleistung P_{N} einen störlichtbogentypischen Pegel haben. Der Schwellwert S2 muss über dem Grundpegel ohne Störlichtbogen liegen.

Der Integrationswert Int2 des ersten Integrators wird nach jeder Halbwelle mit einem festen Schwellwert S4 verglichen. Ist der Integrationswert Int2 größer als der Schwellwert S4, wird der weitere Integrationswert Int3 um den aktuellen Wert Int2 des ersten Integrators erhöht. Ist der Integrationswert Int2 nicht größer als der Schwellwert S4, wird der zweite Integrator gemäß einer ersten Ausführungsvariante dekrementiert. Danach wird der erste Integrator auf den Startwert zurückgesetzt. Gibt es für eine festgelegte Zeitdauer keinen Stromfluss, wird der weitere Integrator dekrementiert. Gemäß einer zweiten Ausführungsvariante erfolgt nur eine zeitliche Dekrementation des weiteren Integrators beziehungsweise Integrationswerts Int3. Das Minimum des Integrationswerts Int3 liegt bei seinem Startwert.

Der erste Integrator sollte auch hier um einen zum Strom proportionalen Wert erhöht werden. Ansonsten kann die Höhe des Inkrements und Dekrements jeweils separat definiert werden.

Überschreitet der weitere Integrator, der den Integrationswert Int3 liefert, den Schwellwert S5, löst, wie erwähnt, der Schutzschalter beziehungsweise AFDD aus. Er trennt über eine dafür vorgesehene Vorrichtung den Verbraucher vom Netz.

Mit dem erfindungsgemäßen Konzept können Störlichtbögen bis zu mehreren 100 A erfasst werden. Vor allem bietet diese Methode nicht nur eine Verbesserung der Fehlauslösungsfestigkeit durch die zusätzliche Information der Rauschleistung, sondern schließt auch die momentan vorhandene Schutzlücke im Bereich von 20 A bis 50 A.

Außerdem gibt es mit dem erfindungsgemäßen Verfahren keine festgelegte Mindesthöhe des Stroms wie bei dem Patent US 6 031 699 A, die erst eine Störlichtbogen-Detektierung erlaubt. Der erfindungsgemäße Algorithmus ist bereits ab Störlichtbögen von ca. 15 A wirksam. Die Flankensteilheit bei Störlichtbögen ist in diesem Bereich nämlich schon hoch genug. Wenn sich der erste Integrator um einen zum Strom proportionalen Wert erhöht, bekommt der erfindungsgemäße Algorithmus mit zunehmendem Strom immer mehr Gewicht, was einen nahtlosen Übergang der bekannten Algorithmen mit dem erfindungsgemäßen Algorithmus ermöglicht und somit die Schutzlücke schließt.

Die im Zusammenhang mit FIG 2 erläuterte Ausführungsvariante bietet zusätzlich noch den Vorteil, dass pro Halbwelle eine eigene Schwelle überschritten werden muss. Dies verhindert, dass Lastströme mit hoher Flankensteilheit aber nicht ausreichend langer Rauschleistung über dem Störlichtbogenschwellwert die Auslösegrenze erreichen.

### Bezugszeichenliste

- 1: Stromverlauf
- 2: Stromanstiegsflanke
- 3: Halbwelle
- dI/dt: Ableitung
- I: Strom
- Int1, Int2, Int3: Integrationswerte
- i₁, i₂, i₃: Werte
- P_{N}: Rauschleistung
- S1: Steilheitsschwellwert
- S2: Leistungsschwellwert
- S3, S4: Integrationsschwellwerte
- t₁ bis t₁₇: Zeitabschnitte

## Patentansprüche

1. Verfahren zum Detektieren eines Störlichtbogenereignisses in einem Wechselspannungsnetz durch
- Erfassen einer aktuellen Rauschleistung (P_{N}) in dem Wechselspannungsnetz,
**gekennzeichnet durch**
- Erfassen einer Steilheit einer Flanke (2) einer Halbwelle (3) eines Stromstärkeverlaufs (1) in dem Wechselspannungsnetz,
- Bilden eines Integrals (Int1, Int2) über der Zeit, wenn die Steilheit der Flanke (2) einen vorbestimmten Steilheitsschwellwert (S1) überschreitet, solange die aktuelle Rauschleistung (P_{N}) während der Halbwelle (3) einen Leistungsschwellwert (S2) übersteigt, und
- Entscheiden, dass das Störlichtbogenereignis vorhanden ist/war, wenn das Integral (Int1, Int2) einen vorgegebenen Integrationsschwellwert (S3, S4) übersteigt.

2. Verfahren nach Anspruch 1, wobei der Strom vor dem Erfassen der Flankensteilheit gleichgerichtet wird.

3. Verfahren nach Anspruch 1 oder 2, wobei die Rauschleistung (P_{N}) nur in einem vorgegebenen Frequenzbereich erfasst wird.

4. Verfahren nach einem der vorhergehenden Ansprüche, wobei das Integral (Int1, Int2) über der Zeit während einer der Halbwelle folgenden weiteren Halbwelle erhöht wird, wenn die Steilheit der Flanke (2) der weiteren Halbwelle ebenfalls über dem vorbestimmten Steilheitsschwellwert (S1) und die aktuelle Rauschleistung (P_{N}) über dem vorbestimmten Leistungsschwellwert (S2) liegen.

5. Verfahren nach einem der Ansprüche 1 bis 3, wobei das Integral (Int1, Int2) nach der Halbwelle (3) und jeder folgenden Halbwelle jeweils auf null zurückgesetzt wird.

6. Verfahren nach einem der vorhergehenden Ansprüche, wobei das Integral (Int1, Int2) während der Halbwelle oder den Halbwellen unverändert bleibt oder reduziert wird, wenn die aktuelle Rauschleistung (P_{N}) nicht über dem vorbestimmten Leistungsschwellwert (S2) liegt.

7. Verfahren nach Anspruch 5, wobei das Wechselspannungsnetz über mehrere Halbwellen (3) bezüglich Störlichtbogenereignissen analysiert wird, die Werte (i₁, i₂, i₃) der Integrale (Int1, Int2) jeweils am Ende der zugehörigen Halbwelle, bevor sie zurückgesetzt werden, zu einer Summe (Int3) aufsummiert werden, und das Vorhandensein eines Lichtbogenereignisses entschieden wird, wenn die Summe (Int3) einen vorgegebenen Summenwert (S5) überschreitet.

8. Verfahren nach einem der vorhergehenden Ansprüche, wobei das Bilden des Integrals (Int1, Int2) über der Zeit durch periodisches Inkrementieren erfolgt.

9. Verfahren nach einem der vorhergehenden Ansprüche, wobei eine aktuelle Stromstärke als Integrand für die Bildung des Integrals (Int1, Int2) eingesetzt wird.

10. Vorrichtung zum Detektieren eines Störlichtbogens in einem Wechselspannungsnetz mit
- einer Leistungsmesseinrichtung zum Erfassen einer aktuellen Rauschleistung (P_{N}) in dem Wechselspannungsnetz,
**gekennzeichnet durch**
- eine Strommesseinrichtung zum Erfassen einer Steilheit einer Flanke (2) einer Halbwelle (3) eines Stromstärkeverlaufs (1) in dem Wechselspannungsnetz,
- eine Integrationseinrichtung zum Bilden eines Integrals (Int1, Int2) über der Zeit, wenn die Steilheit der Flanke (2) einen vorbestimmten Steilheitsschwellwert (S1) überschritten hat, solange die aktuelle Rauschleistung (P_{N}) während der Halbwelle (3) einen Leistungsschwellwert (S2) übersteigt, und
- eine Logikeinrichtung zum Entscheiden, dass das Störlichtbogenereignis vorhanden ist/war, wenn das Integral (Int1, Int2) einen vorgegebenen Integrationsschwellwert (S3, S4) übersteigt.
